# FASCICULE DE BREVET EUROPEEN

(11) **EP 3 747 112 B1**
(45) Date de publication et mention de la délivrance du brevet: **19.07.2023**
(21) Numéro de dépôt: 19701689.2
(22) Date de dépôt: 01.02.2019
(51) Int. Cl.: H02K 5/04

(54) **DISPOSITIF D'ACTIONNEMENT COMPORTANT UN MOTEUR ELECTRIQUE ET VANNE DE CIRCULATION DE FLUIDE LE COMPORTANT**
BETÄTIGUNGSVORRICHTUNG MIT EINEM ELEKTROMOTOR UND FLUIDSTRÖMUNGSVENTIL DAMIT
ACTUATION DEVICE COMPRISING AN ELECTRIC MOTOR, AND FLUID FLOW VALVE COMPRISING SAME

(30) Priorité: 02.02.2018 FR 1850882
(43) Date de publication de la demande: 09.12.2020
(73) Titulaire: Valeo Systèmes de Contrôle Moteur, 95800 Cergy Saint-Christophe (FR)
(72) Inventeur: RIBERA, Frederic, 95800 CERGY ST CHRISTOPHE (FR); TOUITOU, Pascal, 95800 CERGY SAINT CHRISTOPHE (FR); RAUTUREAU, Fabrice, 95800 CERGY SAINT CHRISTOPHE (FR)
(74) Mandataire: Valeo Powertrain Systems
(86) Numéro de dépôt international: PCT/EP2019/052538
(87) Numéro de publication internationale: WO 2019/149904

(56) Documents cités:
- EP-A2- 3 258 095
- DE-A1-102007 039 689
- FR-A1- 3 014 526

## Description

La présente invention concerne un dispositif d'actionnement comportant un moteur électrique. Ce dispositif d'actionnement peut être intégré dans une vanne de circulation de fluide, telle une vanne de contrôle du débit de gaz comburant d'un moteur thermique ou une vanne de recirculation de gaz d'échappement d'un moteur thermique.

Dans les actionneurs de contrôle moteur selon l'état de l'art, comme par exemple dans le document EP3258095 un moteur électrique actionne un mécanisme de commande comprenant un ou plusieurs engrenages. Le moteur électrique est disposé dans un logement fermé aménagé dans le corps de l'actionneur, et est fixé au corps d'actionneur. Généralement, le moteur électrique comporte une plaque de maintien s'étendant transversalement à la direction de l'arbre de sortie du moteur. Cette plaque de maintien comporte deux trous cylindriques situés de part et d'autre de l'arbre du moteur, chaque trou permettant le passage d'une vis de fixation. Au montage, le moteur est inséré dans le logement jusqu'à ce que la plaque de maintien arrive en contact avec le corps d'actionneur, puis les vis de fixation sont disposées dans les trous de la plaque de maintien et serrées. Le serrage des vis de fixation permet de maintenir la plaque de maintien en appui sur le corps et donc d'assurer le maintien mécanique du moteur électrique.

Traditionnellement, il existe un jeu radial entre le moteur électrique et la paroi latérale du logement. Il existe simultanément un jeu axial entre l'extrémité axiale du moteur électrique et la paroi de fond du logement. Le serrage des vis assure donc seulement un maintien de la plaque du moteur.

Il est également possible de réaliser un montage du moteur dans son logement sans jeu axial.

Cela permet d'assurer de manière plus précise le positionnement du pignon, ce qui permet une usure moindre de la denture et un plus faible niveau de frottement.

Afin de garantir une absence de jeu axial, le moteur arrive en butée au fond de son logement alors que la plaque de maintien n'est pas encore en appui sur le corps. Le serrage des vis de fixation doit donc déformer la plaque de fixation au voisinage des trous de passage des vis afin de réaliser le plaquage de la plaque contre le corps d'actionneur.

Cette déformation crée un effort important sur la plaque, susceptible de la déformer et de compromettre l'alignement de l'arbre du moteur et de l'axe du logement.

Le but de l'invention est de fournir un dispositif d'actionnement dans lequel le moteur électrique est monté sans jeu axial tout en évitant d'appliquer un effort excessif à la plaque de maintien. Le dispositif d'actionnement peut être intégré dans une vanne de circulation de fluide, par exemple pour moteur thermique.

A cet effet, l'invention propose un dispositif d'actionnement comportant :
- un moteur électrique,
- un corps comportant un logement de réception du moteur électrique,
- une plaque de maintien agencée pour maintenir le moteur électrique sans jeux axial dans le logement,
- un premier moyen de fixation s'étendant selon un axe et coopérant avec une première surface d'appui de la plaque de maintien, la première surface d'appui étant comprise dans un secteur angulaire de sommet situé sur l'axe du premier moyen de fixation et de valeur angulaire inférieure à 180°,

le logement de réception du moteur électrique s'étendant selon un axe D2 parallèle à l'axe D1 du premier moyen de fixation et parallèle à l'axe D3 du deuxième moyen de fixation, la première et deuxième surface d'appui étant située radialement, relativement à l'axe du logement de réception, entre l'axe du moyen de fixation respectif été l'axe du logement de réception,
la plaque de maintien comportant une patte de saillant radialement, relativement à l'axe du logement de réception, la première surface d'appui de la plaque de maintien étant comprise sur la patte, la plaque de maintien comportant une deuxième patte de maintien saillant radialement, relativement à l'axe du logement de réception, la deuxième patte de maintien comportant une deuxième surface d'appui coopérant avec un deuxième moyen de fixation s'étendant selon un axe D3, la deuxième surface d'appui étant comprise dans un secteur angulaire de sommet situé sur l'axe D3 du deuxième moyen de fixation et de valeur angulaire A2 inférieur à 180°,
lesdites pattes de la plaque de maintien possèdent une forme en U, les branches du U étant tournées vers l'axe D2 du logement et la première et deuxième surface d'appui étant comprise sur la base du U respectif,
le premier moyen de fixation est une vis épaulée, l'épaulement de la vis étant agencé pour appuyer uniquement sur la première surface d'appui de la plaque de maintien et
le deuxième moyen de fixation est une vis épaulée, l'épaulement de la vis étant agencée pour appuyer uniquement sur la deuxième surface d'appui de la plaque de maintien.

La surface d'appui entre le moyen de fixation et la plaque de maintien est ainsi limitée. L'effort appliqué sur la plaque lors de la fixation de celle-ci est ainsi limité. Les contraintes mécaniques dans la plaque de maintien sont réduites. La précision du positionnement du moteur électrique est améliorée et les risques d'endommager la plaque de maintien sont réduits.

La raideur de la patte de fixation peut ainsi facilement être ajustée au besoin de l'application, en sélectionnant la largeur, la longueur et l'épaisseur de la patte en forme de U.

Avantageusement, la plaque de maintien s'étend transversalement à l'axe du moteur électrique.

De préférence, le logement de réception du moteur électrique possède une section transversale circulaire.

Avantageusement, le moteur électrique possède une section transversale circulaire.

Avantageusement, la plaque de maintien est maintenue en appui contre le corps. Autrement dit, le logement du moteur électrique et la partie sur laquelle la plaque de maintien prend appui font partie de la même pièce.

Dans une variante de réalisation, la plaque de maintien est maintenue en appui contre une pièce rigidement fixée au corps.

Autrement dit, le corps peut être réalisé en plusieurs parties assemblées ensemble.

Selon l'invention, la première surface d'appui est située radialement entre l'axe du moyen de fixation et l'axe du logement de réception.

Cette configuration permet de limiter la déformation de la plaque de maintien lors de la fixation du moteur électrique sur le corps, tout en limitant l'encombrement radial.

Avantageusement, la plaque de maintien obture au moins partiellement une première surface axiale du moteur électrique. la plaque de maintien obture totalement une première surface axiale du moteur électrique.

Selon l'invention, la plaque de maintien est en appui contre une face latérale du moteur électrique, la plaque de maintien étant une pièce distincte du moteur électrique.

Il est ainsi possible d'utiliser un même modèle de moteur pour différentes d'applications et de modifier uniquement la plaque de maintien pour réaliser l'adaptation à une géométrie différente. De préférence, le moteur électrique comporte un arbre de rotation et un pignon d'entrainement solidaire de l'arbre, la plaque de maintien étant en vis du pignon d'entrainement selon une direction axiale.

Avantageusement, la plaque de maintien est découpée dans un feuillard métallique.

La plaque de maintien est ainsi fabriquée de manière peu onéreuse et possède de bonnes propriétés mécaniques.

Avantageusement, le moteur électrique possède une plaque de fond située à l'extrémité axiale opposée au pignon d'entrainement, la plaque de fond obturant au moins partiellement une deuxième surface axiale du moteur électrique.

Avantageusement, la plaque de fond du moteur électrique s'étend transversalement à l'axe du moteur électrique.

Avantageusement, la plaque de fond du moteur électrique est en appui contre un fond du logement de réception du moteur électrique.

Autrement dit, le montage du moteur électrique dans le logement est réalisé sans jeu axial. Le moteur électrique est fixé au corps du coté du pignon d'entrainement, par l'intermédiaire de la plaque de maintien. Le moteur électrique est en appui contre le corps du coté de la plaque de fond, c'est-à-dire du coté opposé au pignon d'entrainement. Ce mode de montage améliore le maintien du moteur électrique et augmente la rigidité de l'assemblage. Ce mode de montage améliore la résistance du moteur électrique aux vibrations transmises.

Avantageusement, la plaque de fond comporte un bossage, le bossage recevant un palier de l'arbre de rotation du moteur électrique.

Avantageusement, le fond du logement de réception possède un alésage s'étendant selon l'axe D2, le bossage de la plaque de fond étant reçu au moins partiellement dans l'alésage du fond.

De préférence, l'axe du premier moyen de fixation et l'axe du deuxième moyen de fixation sont parallèles.

De préférence encore, l'axe du premier moyen de fixation, l'axe du deuxième moyen de fixation et l'axe du logement sont parallèles.

Avantageusement, l'écart angulaire entre la première surface d'appui et la deuxième surface d'appui est compris entre 170° et 180°.

L'invention concerne également une vanne de circulation de fluide, comportant :
- Un conduit de circulation de fluide,
- Un organe d'obturation mobile dans le conduit entre une position de fermeture empêchant la circulation de fluide dans le conduit et une position d'ouverture autorisant la circulation de fluide dans le conduit,
- Un dispositif d'actionnement tel que décrit précédemment, le dispositif d'actionnement étant agencé pour déplacer l'organe d'obturation.

L'organe d'obturation peut comprendre une soupape mobile en translation.

L'organe d'obturation peut comprendre un volet mobile en rotation.

Selon un exemple de mise en oeuvre de l'invention, la vanne est une vanne de recirculation de gaz d'échappement entre un circuit d'échappement et un circuit d'admission d'un moteur à combustion. Selon un autre exemple, la vanne est une vanne doseuse du débit d'air comburant d'un moteur à combustion.

D'autres caractéristiques et avantages de l'invention apparaîtront à la lecture de la description détaillée des modes de réalisation donnée à titre d'exemples non limitatifs, accompagnée des figures ci-dessous :
- La figure 1 représente une vue en coupe partielle d'un dispositif d'actionnement selon l'état de l'art,
- La figure 2 est une vue en perspective, partielle, d'un dispositif d'actionnement selon un premier mode de réalisation de l'invention,
- La figure 3 est une vue en perspective, partielle, de la plaque de maintien du dispositif d'actionnement de la figure 2,
- La figure 4 est une vue schématique des efforts lors de la fixation du moteur électrique d'un dispositif d'actionnement selon l'invention,
- La figure 5 est une vue schématique des efforts lors de la fixation du moteur électrique d'un dispositif d'actionnement selon l'état de l'art,
- La figure 6 est une vue en perspective, partielle, d'un dispositif ne faisant pas partie de l'invention,
- La figure 7 est une vue schématique d'une vanne de circulation de fluide intégrant un dispositif d'actionnement selon l'invention.

Afin de faciliter la lecture des figures, les différents éléments ne sont pas nécessairement représentés à l'échelle.

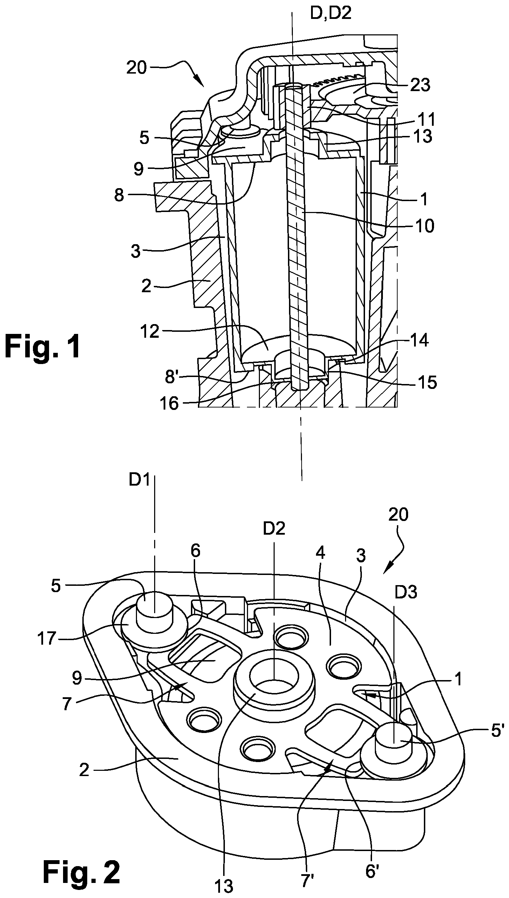

On a représenté sur la figure 1 un dispositif d'actionnement 20, faisant partie d'un actionneur équipant un moteur à combustion, par exemple un moteur d'automobile.

Le dispositif d'actionnement 20 comporte un moteur électrique 1 agencé pour entraîner un mécanisme d'actionnement.

Le moteur électrique 1 comporte un arbre de rotation 10 sur lequel un pignon d'entrainement 11 est fixé. L'arbre de rotation tourne sur deux paliers, chaque palier étant situé à proximité d'une extrémité axiale du moteur électrique. Le pignon 11 entraîne une roue dentée 23. La roue dentée 23 entraîne, directement ou indirectement, un organe mobile tel une soupape ou un volet.

Le moteur électrique 1 est du type à courant continu.

Le dispositif d'actionnement 20 comporte un corps 2 qui reçoit les principaux composants. Le corps 2 est obtenu par moulage, par exemple moulage d'un alliage d'aluminium.

Le corps 2 comporte un logement de réception 3 du moteur électrique 1. Le logement de réception 3 s'étend selon un axe D2.

Le logement 3 de réception du moteur électrique 1 possède une section transversale circulaire.

Le moteur électrique 1 possède une forme générale cylindrique. Ainsi, le moteur électrique 1 possède une section transversale circulaire.

Chaque extrémité de la portion cylindrique du moteur 1 est obturée au moins partiellement par une plaque 9, 12 supportant un palier de rotation de l'arbre 10 du moteur. Chaque plaque 9, 12 est fixée rigidement à la portion cylindrique du moteur électrique 1. Les plaques 9, 12 peuvent par exemple être serties à la portion cylindrique du moteur électrique 1.

La plaque 9 obture la première surface axiale 8 du moteur 1, c'est-à-dire la surface située du coté du pignon d'entrainement 11. La plaque 9 comporte un bossage 13 recevant un palier de l'arbre de rotation 10 du moteur électrique 1.

De la même façon, le moteur électrique 1 possède une plaque de fond 12 située à l'extrémité axiale opposée au pignon d'entrainement 11, la plaque de fond 12 obturant au moins partiellement une deuxième surface axiale 8' du moteur électrique 1.

La plaque de fond 12 du moteur électrique 1 s'étend transversalement à l'axe D du moteur électrique 1.

La plaque de fond 12 comporte un bossage 15, le bossage 15 recevant un palier de l'arbre de rotation 10 du moteur électrique 1.

Le montage du moteur électrique 1 dans un dispositif d'actionnement 20 selon l'invention est réalisé de la manière suivante :
Le moteur électrique 1 est inséré dans le logement 3, la plaque de fond 12 étant insérée en premier dans le logement 3. Puis le moteur électrique 1 est poussé jusqu'au fond du logement 3.

Le fond 14 du logement 3 de réception possède un alésage 16 s'étendant selon l'axe D2, le bossage 15 de la plaque de fond 12 étant reçu au moins partiellement dans l'alésage 16 du fond 14.

Il existe un jeu radial entre l'alésage 16 et le bossage 15, de sorte que le bossage 15 peut coulisser dans l'alésage 16 pendant le montage. L'ordre de grandeur du jeu est de quelques centièmes de millimètres, de sorte qu'un centrage du palier est réalisé. De plus, l'alésage 16 assure un maintien latéral du moteur électrique.

Comme schématisé sur la figure 2, une fois le moteur électrique 1 positionné dans le logement 3, la fixation du moteur 1 est assurée par l'intermédiaire d'une plaque de maintien 4 disposée sur la plaque 9 du moteur électrique 1.

Sur l'exemple des figures 2, 3 et 6, la plaque de maintien 4 est une pièce distincte du moteur électrique 1.

Il est également possible d'avoir une plaque de maintien 4 faisant partie intégrante du moteur électrique 1. Dans ce mode de réalisation, ne faisant pas partie de l'invention, la plaque de maintien 4 et la face latérale 9 du moteur électrique 1 sont confondues et forment une pièce unique.

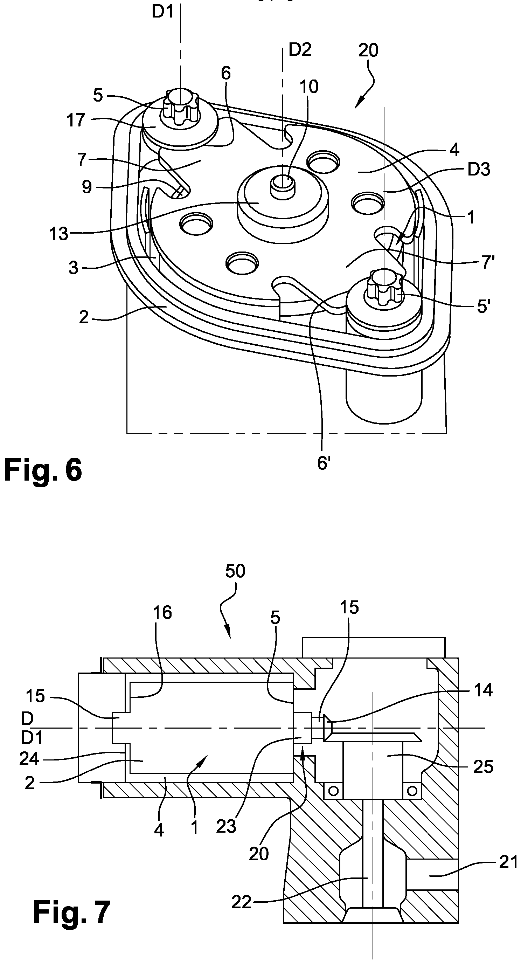

Sur l'exemple représenté sur les figures 2 et 6, la plaque de maintien 4 est fixée au corps 2 par un premier moyen de fixation 5 et un deuxième moyen de fixation 5'.

L'axe D1 du premier moyen de fixation 5 et l'axe D3 du deuxième moyen de fixation 5' sont parallèles.

Le logement de réception 3 du moteur électrique 1 s'étend selon un axe D2 parallèle à l'axe D1 du premier moyen de fixation 5.

Autrement dit, l'axe D1 du premier moyen de fixation 5, l'axe D3 du deuxième moyen de fixation 5' et l'axe D2 du logement 3 sont parallèles.

La profondeur du logement 3 est légèrement inférieure à la longueur du moteur 1.

Ainsi, la plaque de fond 12 du moteur électrique 1 est en appui contre un fond 14 du logement 3 de réception du moteur électrique 1.

Le montage du moteur électrique 1 dans le logement 3 est ainsi réalisé sans jeu axial.

Ce mode de montage améliore le maintien du moteur électrique 1 et augmente la rigidité de l'assemblage. Ce mode de montage améliore la résistance du moteur électrique aux vibrations qui lui sont transmises. Les vibrations proviennent, dans l'exemple décrit, du moteur thermique sur lequel le dispositif d'actionnement est monté. En réduisant les vibrations transmises au moteur électrique, la fiabilité du moteur électrique 1 est améliorée.

On a représenté sur la figure 2 un dispositif d'actionnement 20, comportant :
- un moteur électrique 1,
- un corps 2 comportant un logement 3 de réception du moteur électrique 1,
- une plaque de maintien 4 agencée pour maintenir le moteur électrique 1 dans le logement 3,
- un premier moyen de fixation 5 s'étendant selon un axe D1 et coopérant avec une première surface d'appui 6 de la plaque de maintien 4,
caractérisé en ce que la première surface d'appui 6 est comprise dans un secteur angulaire de sommet situé sur l'axe D1 du premier moyen de fixation 5 et de valeur angulaire A1 inférieure à 180°.

L'aire de la surface d'appui 6 entre le moyen de fixation 5 et la plaque de maintien 4 est ainsi réduite. L'effort appliqué sur la plaque de maintien 4 lors de la fixation de celle-ci est ainsi diminué. Les contraintes mécaniques dans la plaque de maintien 4 sont réduites. La précision du positionnement du moteur électrique est améliorée et les risques d'endommager le moteur électrique et la plaque de maintien sont réduits.

La plaque de maintien 4 s'étend transversalement à l'axe D du moteur électrique 1.

Le moyen de fixation 5 est une vis épaulée, l'épaulement 17 de la vis étant agencé pour appuyer sur la première surface d'appui 6 de la plaque de maintien 4. De même, le deuxième moyen de fixation 5' est une vis épaulée.

La plaque de maintien 4 est maintenue en appui contre le corps 2.

La plaque de maintien 4 est en appui contre une face latérale 9 du moteur électrique 1, la plaque de maintien 4 étant une pièce distincte du moteur électrique 1.

La plaque de maintien 4 comporte un orifice permettant le passage du bossage 13 de la plaque 9.

La première surface d'appui 6 est située radialement entre l'axe D1 du moyen de fixation et l'axe D2 du logement 3 de réception.

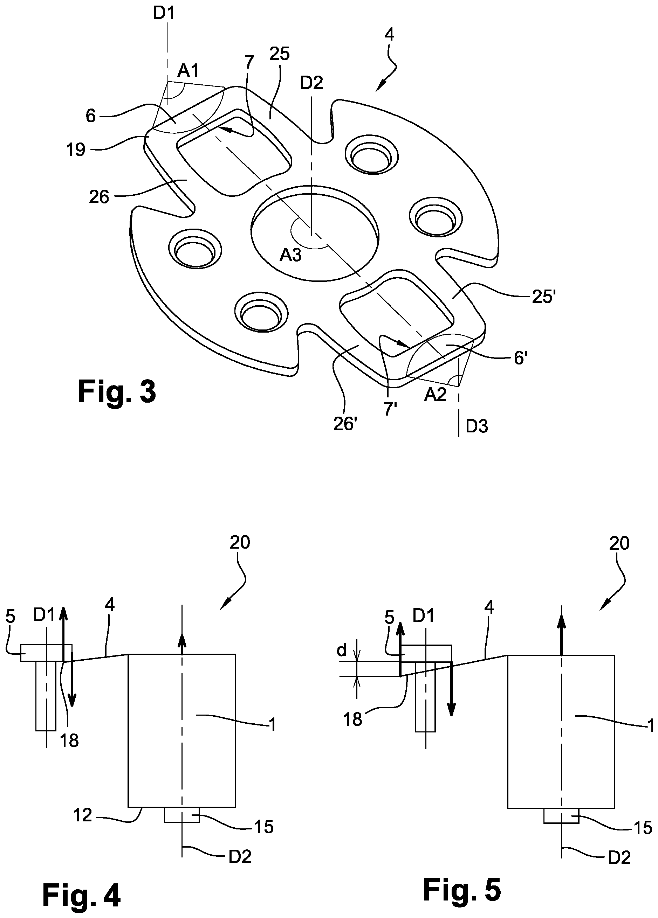

La figure 4 schématise les efforts appliqués sur la plaque de maintien 4 lors du serrage de la vis 5 afin de fixer le moteur électrique 1 dans le corps 2 d'un dispositif d'actionnement selon l'invention.

La figure 5 schématise les efforts appliqués sur une plaque de maintien selon l'état de l'art.

Afin d'assurer un montage du moteur électrique 1 sans jeu axial dans son logement, il subsiste un jeu axial entre la plaque de maintien 4 et le corps 2 lorsque le moteur 1 atteint le fond du logement 3. Le serrage de la vis de fixation 5 permet de déformer la plaque de maintien 4 de façon à l'amener en contact avec le corps 2.

Dans le cas d'une plaque de maintien selon l'invention, comme la surface de contact 6 entre la vis 5 et la plaque de maintien 4 est limité à un secteur angulaire centré sur l'axe de la vis 5, seule la portion 18 située axialement entre la vis 5 et le corps 2 est déformée et plaquée lors du serrage de la vis 5. L'amplitude de la déformation subie par la plaque 4 est minimisée, ce qui limite les efforts de serrage, ainsi que les risques de distorsion de la plaque 4 lors du serrage.

Comme schématisé sur la figure 5, dans le cas d'une plaque de maintien selon l'état de l'art, la portion 18 déformée est répartie tout autour de l'axe de la vis 5. L'amplitude d de la déformation est supérieure à celle de la configuration proposée par l'invention.

Grâce à l'invention, les contraintes résiduelles dans la plaque de maintien 4 sont minimisées.

La figure 3 représente une plaque de maintien 4 selon l'invention, prise isolément.

La plaque de maintien 4 comporte une patte 7 saillant radialement, la première surface d'appui 6 de la plaque de maintien 4 étant comprise sur la patte 7.

Plus précisément, la patte 7 de la plaque de maintien 4 possède une forme de U, les branches 25,26 du U étant tournées vers l'axe D2 du logement 3 et la première surface d'appui 6 étant comprise sur la base 19 du U.

La raideur de la patte de fixation 7 peut ainsi facilement être ajustée au besoin de l'application, en sélectionnant la largeur, la longueur et l'épaisseur des branches 25,26 ainsi que de la base 19 de la patte 7 en forme de U. Dans une réalisation ne faisant pas partie de l'invention les pattes 7, 7' selon une forme pleine, comme illustré sur la figure 6. Dans ce cas les pattes 7, 7' ont une forme sensiblement rectangulaires. La plaque de maintien 4 est découpée dans un feuillard métallique.

La plaque de maintien peut ainsi fabriquée de manière peu onéreuse, et possède de bonnes propriétés mécaniques.

Comme détaillé sur la figure 3, la plaque de maintien 4 comporte une deuxième patte de maintien 7' saillant radialement, la deuxième patte de maintien 7' comportant une deuxième surface d'appui 6' coopérant un deuxième moyen de fixation 5' s'étendant selon un axe D3, la deuxième surface d'appui 6' étant comprise dans un secteur angulaire de sommet situé sur l'axe D3 du deuxième moyen de fixation et de valeur angulaire A2 inférieure à 180°.

L'écart angulaire A3 entre la première surface d'appui 6 et la deuxième surface d'appui 6' est compris entre 170° et 180°. Cette disposition permet de répartir les efforts et d'assurer un maintien efficace du moteur électrique 1.

Sur l'exemple représenté, la deuxième patte de maintien 7' possède une forme de U, les branches 25', 26' étant reliées à la base 19' de manière équivalente à ce qui a été décrit pour la première patte de maintien 7.

Sur l'exemple représenté, la patte de maintien 4 est symétrique par rapport à un plan.

Le dispositif d'actionnement 20 précédemment décrit peut être utilisé dans de nombreux actionneurs différents, tel par exemple une vanne de circulation de fluide.

Ainsi, l'invention concerne également une vanne 50 de circulation de fluide, comportant :
- Un conduit 21 de circulation de fluide,
- Un organe d'obturation 22 mobile dans le conduit 21 entre une position de fermeture empêchant la circulation de fluide dans le conduit 21 et une position d'ouverture autorisant la circulation de fluide dans le conduit 21,
- Un dispositif d'actionnement 20 tel que décrit précédemment, le dispositif d'actionnement 20 étant agencé pour déplacer l'organe d'obturation 22.

La vanne 50 est décrite de façon schématique sur la figure 7.

La vanne 50 peut être une vanne de recirculation de gaz d'échappement entre un circuit d'échappement et un circuit d'admission d'un moteur à combustion.

Selon un mode de réalisation, l'organe d'obturation 22 peut comprendre une soupape mobile en translation.

Selon un autre mode de réalisation, l'organe d'obturation 22 peut comprendre un volet mobile en rotation.

L'utilisation dans la vanne 50 d'un dispositif d'actionnement tel que décrit précédemment permet d'améliorer la fiabilité de la vanne 50 dans les applications pour lesquelles le moteur thermique transmet un niveau de vibrations élevé aux organes montés sur le moteur thermique.

## Revendications

1. Dispositif d'actionnement (20), comportant :
- un moteur électrique (1),
- un corps (2) comportant un logement (3) de réception du moteur électrique (1),
- une plaque de maintien (4) agencée pour maintenir le moteur électrique (1), sans jeux axial dans le logement (3),
- un premier moyen de fixation (5) s'étendant selon un axe (D1) et coopérant avec une première surface d'appui (6) de la plaque de maintien (4), la première surface d'appui (6) est comprise dans un secteur angulaire de sommet situé sur l'axe (D1) du premier moyen de fixation (5) et de valeur angulaire (A1) inférieure à 180°,
le logement (3) de réception du moteur électrique s'étendant selon un axe (D2) parallèle à l'axe (D1) du premier moyen de fixation (5) et parallèle à l'axe (D3) du deuxième moyen de fixation (5'), la première et deuxième surface d'appui (6) étant située radialement, relativement à l'axe (D2) du logement (3) de réception, entre l'axe (D1, D3) du moyen de fixation respectif et l'axe (D2) du logement (3) de réception,
la plaque de maintien (4) comportant une patte (7) de saillant radialement, relativement à l'axe (D2) du logement (3) de réception, la première surface d'appui (6) de la plaque de maintien (4) étant comprise sur la patte (7), la plaque de maintien (4) comportant une deuxième patte de maintien (7') saillant radialement, relativement à l'axe (D2) du logement (3) de réception, la deuxième patte de maintien comportant une deuxième surface d'appui (6') coopérant avec un deuxième moyen de fixation (5') s'étendant selon un axe (D3), la deuxième surface d'appui (6') étant comprise dans un secteur angulaire de sommet situé sur l'axe (D3) du deuxième moyen de fixation et de valeur angulaire (A2) inférieur à 180°,
**caractérisé en ce que** lesdites pattes (7) de la plaque de maintien (4) possèdent une forme en U, les branches du U étant tournées vers l'axe (D2) du logement et la première et deuxième surface d'appui étant comprise sur la base du U respectif,
le premier moyen de fixation (5) est une vis épaulée, l'épaulement (17) de la vis étant agencé pour appuyer uniquement sur la première surface d'appui (6) de la plaque de maintien et
le deuxième moyen de fixation (5') est une vis épaulée, l'épaulement de la vis étant agencé pour appuyer uniquement sur la deuxième surface d'appui (6') de la plaque de maintien.

2. Dispositif d'actionnement (20) selon la revendication 1, dans lequel la plaque de maintien (4) est en appui contre une face latérale (9) du moteur électrique (1), la plaque de maintien (4) étant une pièce distincte du moteur électrique (1).

3. Vanne (50) de circulation de fluide, comportant :
- Un conduit (21) de circulation de fluide,
- Un organe d'obturation (22) mobile dans le conduit (21) entre une position de fermeture empêchant la circulation de fluide dans le conduit (21) et une position d'ouverture autorisant la circulation de fluide dans le conduit (21),
- Un dispositif d'actionnement (20) selon l'une des revendications précédentes, le dispositif d'actionnement (20) étant agencé pour déplacer l'organe d'obturation (22).

4. Vanne (50) selon la revendication précédente, la vanne (50) étant une vanne de recirculation de gaz d'échappement entre un circuit d'échappement et un circuit d'admission d'un moteur à combustion.

## Patentansprüche

1. Betätigungsvorrichtung (20), umfassend:
- einen Elektromotor (1),
- einen Körper (2), der eine Ausnehmung (3) zur Aufnahme des Elektromotors (1) umfasst,
- eine Halteplatte (4), die dazu ausgebildet ist, den Elektromotor (1) ohne axiales Spiel in der Ausnehmung (3) zu halten,
- ein erstes Fixierungsmittel (5), das sich entlang einer Achse (D1) erstreckt und mit einer ersten Auflagefläche (6) der Halteplatte (4) zusammenwirkt, wobei die erste Auflagefläche (6) in einem Scheitelwinkelsektor enthalten ist, der auf der Achse (D1) des ersten Fixierungswinkels (5) liegt und einen Winkelwert (A1) von weniger als 180° hat,
wobei sich die Ausnehmung (3) zur Aufnahme des Elektromotors entlang einer Achse (D2) erstreckt, die parallel zur Achse (D1) des ersten Fixierungsmittels (5) und parallel zur Achse (D3) des zweiten Fixierungsmittels (5') verläuft, wobei die erste und zweite Auflagefläche (6) radial, relativ zur Achse (D2) der Ausnehmung (3) zur Aufnahme, zwischen der Achse (D1, D3) des jeweiligen Fixierungsmittels und der Achse (D2) der Ausnehmung (3) zur Aufnahme gelegen sind,
wobei die Halteplatte (4) eine Lasche (7) umfasst, die radial, relativ zur Achse (D2) der Ausnehmung (3) zur Aufnahme, herausragt, wobei die erste Auflagefläche (6) der Halteplatte (4) auf der Lasche (7) enthalten ist, wobei die Halteplatte (4) eine zweite Haltelasche (7') umfasst, die radial, relativ zur Achse (D2) der Ausnehmung (3) zur Aufnahme, herausragt, wobei die zweite Haltelasche eine zweite Auflagefläche (6') umfasst, die mit einem zweiten Fixierungsmittel (5') zusammenwirkt, das sich entlang einer Achse (D3) erstreckt, wobei die zweite Auflagefläche (6') in einem Scheitelwinkelsektor enthalten ist, der auf der Achse (D3) des zweiten Fixierungsmittels liegt und einen Winkelwert (A2) von weniger als 180° hat,
**dadurch gekennzeichnet, dass** die Laschen (7) der Halteplatte (4) eine U-Form besitzen, wobei die Schenkel des U zur Achse (D2) der Ausnehmung gewandt sind und wobei die erste und zweite Auflagefläche auf der Basis des jeweiligen U enthalten sind,
das erste Fixierungsmittel (5) eine Pass-Schulterschraube ist, wobei die Schulter (17) der Schraube dazu ausgebildet ist, nur auf der ersten Auflagefläche (6) der Halteplatte aufzuliegen, und das zweite Fixierungsmittel (5') eine Pass-Schulterschrauben ist, wobei die Schulter der Schraube dazu ausgebildet ist, nur auf der zweiten Auflagefläche (6') der Halteplatte aufzulegen.

2. Betätigungsvorrichtung (20) nach Anspruch 1, bei der die Halteplatte (4) an einer Seitenfläche (9) des Elektromotors (1) in Anlage ist, wobei die Halteplatte (4) ein vom Elektromotor (1) verschiedenes Teil ist.

3. Fluidströmungsventil (50), umfassend:
- einen Fluidströmungskanal (21),
- ein Verschlussorgan (22), das in dem Kanal (21) zwischen einer Schließstellung, die die Fluidströmung in dem Kanal (21) verhindert, und einer Öffnungsstellung, die die Fluidströmung in dem Kanal (21) zulässt, beweglich ist,
- eine Betätigungsvorrichtung (20) nach einem der vorhergehenden Ansprüche, wobei die Betätigungsvorrichtung (20) dazu ausgebildet ist, das Verschlussorgan (22) zu verlagern.

4. Ventil (50) nach dem vorhergehenden Anspruch, wobei das Ventil (50) ein Abgasrückführungsventil zwischen einem Abgaskreis und einem Ansaugkreis eines Verbrennungsmotors ist.

## Claims

1. Actuating device (20) having:
- an electric motor (1),
- a body (2) having a recess (3) for receiving the electric motor (1),
- a retaining plate (4) designed to retain the electric motor (1) in the recess (3) without axial play,
- a first fastening means (5) extending along an axis (D1) and interacting with a first bearing surface (6) of the retaining plate (4), the first bearing surface (6) is comprised in an angular sector with a vertex located on the axis (D1) of the first fastening means (5) and with an angular value (A1) less than 180°,
the recess (3) for receiving the electric motor extending along an axis (D2) parallel to the axis (D1) of the first fastening means (5) and parallel to the axis (D3) of the second fastening means (5'), the first and the second bearing surface (6) being located radially, in relation to the axis (D2) of the receiving recess (3), between the axis (D1, D3) of the respective fastening means and the axis (D2) of the receiving recess (3),
the retaining plate (4) having a tab (7) protruding radially in relation to the axis (D2) of the receiving recess (3), the first bearing surface (6) of the retaining plate (4) being comprised on the tab (7), the retaining plate (4) having a second retaining tab (7') protruding radially in relation to the axis (D2) of the receiving recess (3), the second retaining tab having a second bearing surface (6') interacting with a second fastening means (5') extending along an axis (D3), the second bearing surface (6') being comprised in an angular sector with a vertex located on the axis (D3) of the second fastening means and with an angular value (A2) less than 180°,
**characterized in that** said tabs (7) of the retaining plate (4) have a U shape, the arms of the U pointing towards the axis (D2) of the recess and the first and the second bearing surface being comprised on the base of the respective U,
the first fastening means (5) is a shouldered screw, the shoulder (17) of the screw being designed to bear solely against the first bearing surface (6) of the retaining plate, and
the second fastening means (5') is a shouldered screw, the shoulder of the screw being designed to bear solely against the second bearing surface (6') of the retaining plate.

2. Actuating device (20) according to Claim 1, wherein the retaining plate (4) bears against a lateral face (9) of the electric motor (1), the retaining plate (4) being a part separate from the electric motor (1).

3. Fluid-circulation valve (50), having:
- a fluid-circulation duct (21),
- a shut-off member (22) movable in the duct (21) between a closed position preventing the circulation of fluid in the duct (21) and an open position allowing the circulation of fluid in the duct (21),
- an actuating device (20) according to either of the preceding claims, the actuating device (20) being designed to displace the shut-off member (22) .

4. Valve (50) according to the preceding claim, the valve (50) being a valve for recirculating exhaust gas between an exhaust circuit and an intake circuit of a combustion engine.
